# EUROPEAN PATENT SPECIFICATION

(11) **EP 1 000 419 B1**
(45) Date of publication and mention of the grant of the patent: **20.03.2002**
(21) Application number: 98943767.8
(22) Date of filing: 22.07.1998
(51) Int. Cl.: G08B 13/24, G01V 15/00

(54) **SECURITY ELEMENT FOR THE ELECTRONIC SURVEILLANCE OF ARTICLES**
SICHERUNGSELEMENT FÜR ELEKTRONISCHE ARTIKELSICHERUNG
ELEMENT DE SECURITE POUR LA SURVEILLANCE ELECTRONIQUE D'ARTICLES

(30) Priority: 29.07.1997 EP 97112981
(43) Date of publication of application: 17.05.2000
(73) Proprietor: Meto International GmbH, 69434 Hirschhorn/Neckar (DE); Sensormatic Electronics Corporation, Boca Raton, Florida 33431-0700 (US)
(72) Inventor: RÜHRIG, Manfred, D-69469 Weinheim (DE); STOCKS, David, Royston, Herts SG8 6UH (GB); PATTERSON, Hubert, A., Boca Raton, FL 33431 (US); MEARS, Gregory, N., Boca Raton, FL 33498 (US)
(74) Representative: Driver, Virginia Rozanne
(86) International application number: EP9804596
(87) International publication number: WO9906978

(56) References cited:
- EP-A- 0 123 557
- EP-A- 0 226 812
- EP-A- 0 295 085
- US-A- 5 565 847
- PATENT ABSTRACTS OF JAPAN vol. 095, no. 003, 28 April 1995 & JP 06 348880 A (UNITIKA LTD), 22 December 1994

## Description

This invention relates to a security element for the electronic surveillance of articles.

Security elements in the form of soft magnetic strip material are frequently used in department stores for the protection of merchandise against pilferage. To accomplish a sufficiently high detection rate, sophisticated methods are employed which reduce the risk of false alarms effectively. Thus, it is known from EP 123 586 B to emit into the interrogation zone, in addition to two interrogation fields with the frequencies f1 and f2 in the kilohertz range, a field with a frequency in the hertz range. The two interrogation fields with the frequencies f1 and f2 excite a security element present in the interrogation zone to remit a characteristic signal with the intermodulation frequencies n • f1 ± m • f2 (where n, m = 0, 1, 2,...). The low-frequency interrogation field has the effect of driving the security element from saturation in one direction into saturation in the other direction at the clock rate of this particular field. As a result, the characteristic signal occurs cyclically with the frequency of the low-frequency field.

As an alternative solution of a system referred to as a harmonic detection system, it has further become known to use only one interrogation field in the kilohertz range for excitation of the security element, with the characteristic signal of the security element occurring again at the clock rate of a low-frequency field cycling the soft magnetic material between the two states of saturation.

For purposes of evaluation, the shape of the characteristic signal is subsequently compared with a predetermined signal shape. If the two coincide, this is interpreted as the unauthorized presence of a protected article in the interrogation zone; an alarm is then produced indicating to sales staff that a theft has occurred.

The hysteresis loops of security elements manufactured from a soft magnetic material follow an essentially linear course between the two states of saturation. In addition, security elements have become known whose hysteresis loops exhibit an abrupt transition between the two saturation states as soon as an external magnetic field compels them to change their saturation direction. Materials showing discontinuities between the two states of saturation are referred to as "materials with Barkhausen effect". They are characterized by high permeability already in the low-frequency range, which means that they are excited to emit a characteristic signal by low-frequency interrogation fields. Further, the characteristic signals of Barkhausen materials feature a sharp peak. This again means that a relatively large signal component occurs in high-order harmonics.

Materials of this type are manufactured by subjecting soft magnetic materials to a suitable annealing process. The properties of these materials and the physical principles of the Barkhausen effect are described in detail in U.S. Pat. No. 4,660,025 or also in EP 0 448 114 A1. In particular, these prior-art specifications make reference to how soft magnetic material can be subjected to special physical treatment to turn into a material with high Barkhausen effect.

Security elements utilizing the Barkhausen effect differ significantly from soft magnetic security elements as regards their signal shape. As a direct consequence thereof, the probability of their being detected in so-called harmonic systems is relatively low; soft magnetic security elements, in turn, are difficult to detect in systems designed for the detection of security elements utilizing the Barkhausen effect. The situation is different if it is aimed to have a security element detected in both a harmonic and a Barkhausen surveillance system. Where both types of security element, that is one employing soft magnetic and one employing Barkhausen material, are combined for integration into one security element, these may, under circumstances, influence each other through their magnetic fields such that the intermodulation signal of the combined security element is detectable neither in a harmonic nor in a Barkhausen surveillance system.

US 5,565,847 describes a tag which has a plurality of resonating sections each having separate frequencies of excitation. Each of the strips has the same material in different lengths in order to achieve different oscillating frequencies. This is to provide a multi-bit tag.

According to EP 0295085, an anti-pilferage tag is disclosed which uses different ferromagnetic material compositions and in particular a combination of hard or semi-hard magnetic material which a soft magnetic material. The hard or semi-hard magnetic material acts as a clamp which holds the soft material in a fixed magnetic state to give rise to a specific response to an interrogating field.

It is an object of the present invention to propose a security element which is detected by surveillance systems operating in different frequency ranges.

This object is accomplished in that the security element is comprised of at least two materials of high permeability which, when excited by an external alternating magnetic field, emit each a characteristic signal; the maximum signal components of the two materials lie in different frequency ranges; further, the signal components of the one material are negligibly low in that particular frequency range in which the signal component of the other material is at a maximum level.

According to an advantageous further feature of the security element of the present invention, the physical properties of the two materials are coordinated such that the component of the characteristic signal of the one material is negligibly low in that particular frequency range in which the signal component of the characteristic signal of the other material is at a maximum level.

Another solution aimed at accomplishing the object of the present invention provides for the security element to be comprised of a material with Barkhausen effect (high permeability; low coercive force in the frequency range (F1), high coercive force in the frequency range (F2), where F2 >> F1), which material is excited by an external magnetic field to emit a characteristic signal detectable in a surveillance system (S1), and of a soft magnetic material (high permeability; low coercive force in the frequency range (F2)) which, when an alternating magnetic field is applied, is excited to emit a characteristic signal detectable in a surveillance system (S2); further, the physical properties of the two materials are coordinated such that the intensity of the characteristic signal (signal 2) of the soft magnetic material is negligibly low in the detection range (F1) of the surveillance system (S1), whilst it attains its maximum level in the detection range (F2) of the surveillance system (S2), and that the intensity of the characteristic signal (signal 1) of the material with Barkhausen effect attains a maximum level in the detection range (F1) of the surveillance system (S1), whilst it is negligibly low in the detection range (F2) of the surveillance system (S2).

Physical properties in respect of the Barkhausen security elements are understood to mean that the material is optimized by its outer shape, by annealing, or by inducing mechanical stress. In respect to the soft magnetic material, such variation of the physical properties, for example, in cases where strip elements are used, means an adjustment of the length and thus of the demagnetizing factor of the strip elements.

In an advantageous feature of the security element of the invention, the two materials are present in the form of a thin film and/or a strip and/or a wire and/or a foil. Conveniently, the two materials are utilized in like shape.

As mentioned in the foregoing, optimization of the frequency response of the materials utilized is effected by a variation of their physical properties. As a preferred further feature, it is generally proposed dimensioning the bulk components of the two materials such that their signal components in the respective other surveillance system are negligibly low.

A still further optimization may be accomplished by a suitable relative arrangement of the materials. Preferably, this relative arrangement is selected such that coupling via their magnetic fields is as low as possible. The simplest procedure would be to select the relative distance of the Barkhausen security element and the soft magnetic security element correspondingly large. This, however, entails the disadvantage that it is necessary for the combined security element to be of large dimensions, which one wishes to avoid generally (for cost reasons). Optimization within the meaning of the invention rather means seeking a compromise between minimum interaction and maximum possible detection rate in systems designed to operate in different frequency ranges for the detection of characteristic signals.

According to an advantageous further feature of the security element of the invention, it is proposed providing the materials with an elongated shape and aligning them parallel to each other. This enables the manufacture of security elements having relatively little lateral extent.

Where the size of the security elements plays a secondary role, it is possible in cases where two materials are used to arrange them at any desired relative angle (α). In an optimum arrangement, the two materials are at right angles to each other, because then mutual interference equals zero.

It has proven to be particularly suitable if the magnetostriction of the materials utilized is low.

According to an advantageous further feature of the of the invention the security element offers the possibility for deactivation. This is achieved by adding a semi-hard or hard magnetic material, preferable in the form of laminas, to at least one of the two materials. Deactivation is then achieved by magnetizing the semi hard or hard magnetic material to a level high enough to prevent the soft magnetic material and/or the material with the strong Barkhausen effect from generating a characteristic a signal within the interrogation field.

If only one of the two materials is made deactivatable, for instance the soft magnetic component, optimum detection could be achieved in the other type of surveillance systems, in this case the Barkhausen system, and vice versa. If both materials are combined with a semi hard or hard magnetic component the security element could be deactivated for either type of surveillance system. In a preferred embodiment of the present invention the semi-hard or hard magnetic components differ in at least one of their magnetic properties, for instance their coercive field levels. This allows to chose between optimum detection in either system on one hand and optimum compatibility on the other

The present invention is defined by the appended claims and will be described in more detail in the following with reference to the accompanying drawings. In the drawings,
FIG. 1 is a perspective view of a Barkhausen (a) and a harmonic surveillance system (b);
FIG. 2 is a view of the hysteresis loops of soft magnetic material and of material with high Barkhausen effect;
FIG. 3a is a view of an advantageous design of the security element of the present invention;
FIG. 3b is a detail view of the design of FIG. 3a;
FIG. 3c is a view of a further design of the security element of the present invention;
FIG. 3d a design for a deactivatable version of the security element of the present invention;
FIG. 4 is a schematic view of the characteristic signals in a Barkhausen surveillance system, in which:
   (a)shows the characteristic signal of the soft magnetic material;
   (b) shows the characteristic signal of the Barkhausen material; and
   (c) shows the characteristic signal of a security element of the present invention;
FIG. 5 is a schematic view of the characteristic signals in a harmonic surveillance system, in which:
   (a)shows the characteristic signal of the soft magnetic material;
   (b) shows the characteristic signal of the Barkhausen material; and
   (c) shows the characteristic signal of a security element of the present invention;
FIG. 6 is a schematic view of the characteristic signals in a harmonic surveillance system with two high frequency interrogation fields and one low-frequency interrogation field, in which:
   (a)shows the characteristic signal of the soft magnetic material;
   (b)shows the characteristic signal of the Barkhausen material; and
   (c) shows the characteristic signal of a security element of the present invention; and
FIG. 7 is a view of the frequency spectra in a Barkhausen surveillance system of
   (a)a Barkhausen security element;
   (b)a soft magnetic security element; and
   (c)a security element of the present invention.

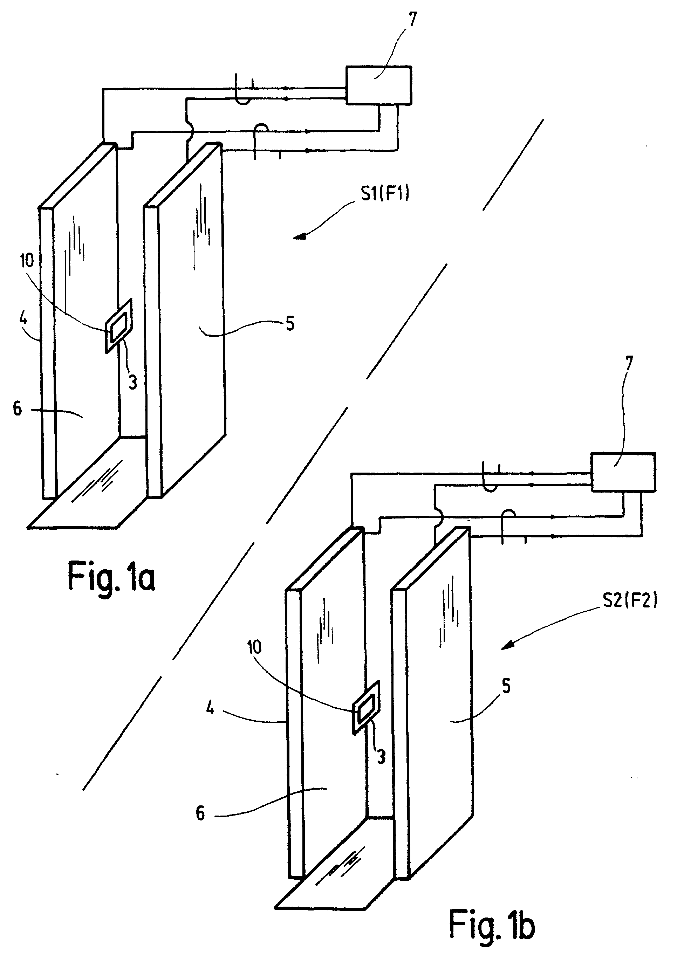

Referring now to FIG. 1a of the drawings, there is shown a perspective representation of a surveillance system S1 for Barkhausen security elements, while FIG. 1b shows a perspective representation of a harmonic surveillance system S2. Both surveillance systems bear great resemblance to each other as regards their structure and their mode of operation in general. The differences lie merely in the detail.

The transmitting device 4 emits an interrogation field H into the zone 6 to be protected. The Barkhausen security element 1 and the soft magnetic security element 2 are excited by the interrogation field H to emit a characteristic signal. While the interrogation frequency of the Barkhausen surveillance system S1 is in the low-frequency range (at 70 hertz, for example), the interrogation frequency of the harmonic system S2 lies in the kilohertz range. As set forth in the opening statement hereof, the high-frequency interrogation frequency in harmonic surveillance systems may also be modulated by a low-frequency interrogation frequency.

The characteristic signal is detected by the associated receiving device 5 and transmitted to the computing/control unit 7. This unit evaluates the signal in accordance with a predetermined algorithm, releasing, where applicable, an alarm to indicate the unauthorized presence of a protected article 10 in the interrogation zone 6.

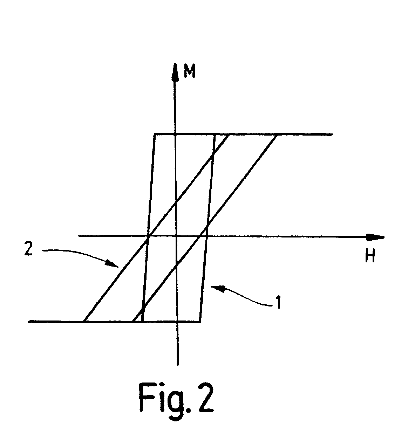

In FIG. 2, the static hysteresis loops of a soft magnetic material 2 and of a material 1 with high Barkhausen effect are plotted in the conventional H-M diagram. While the hysteresis loop of the soft magnetic material 2 exhibits linear continuities between the two opposite states of magnetization, the material 1 with the high Barkhausen effect shows discontinuities at a relatively low field strength H.

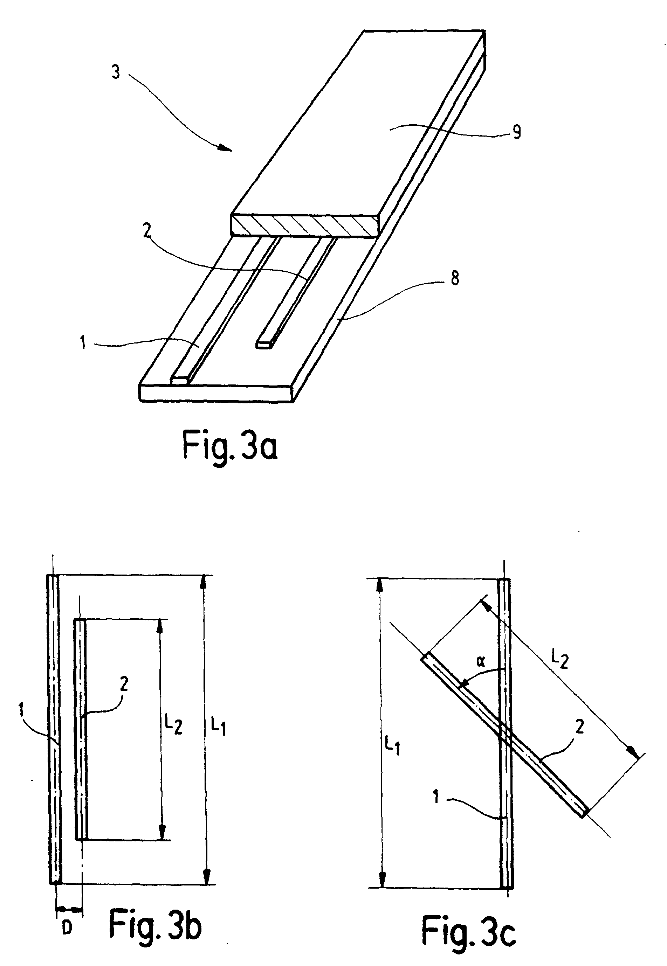

FIG. 3a shows an advantageous design of the security element 3 of the present invention. Two strip members are arranged on a substratum 8. While the one strip member is made of a material 1 with high Barkhausen effect, the other is fabricated from a soft magnetic material 2. The two strip members 1, 2 are arranged parallel to each other. They are covered by a layer 9 suitable for being printed upon. FIG. 3b shows the two strip members 1, 2 without the substratum 8 and without the print layer 9.

The physical properties of the two strip members 1, 2 (lengths (L1, L2), permeability and coercive force, bulk components, etc.), and the relative distance (D) of the two members 1, 2 are dimensioned such that the characteristic signals of the two security elements 1, 2 are varied only insignificantly by the effect of the other security element 2, 1, respectively. Therefore, the security element 3 of the invention is detected equally reliably by both surveillance systems S1, S2.

FIG. 3c shows an alternative design of the security element 3 of the present invention. The two strip members 1, 2 intersect at an angle α. In an optimum arrangement, this angle α amounts to 90 degrees; in such an arrangement, mutual interference of the magnetic fields of the two security elements 1, 2 is zero. This is, however, at the expense of a correspondingly large dimension of the security element 3 which does not appear acceptable for any application.

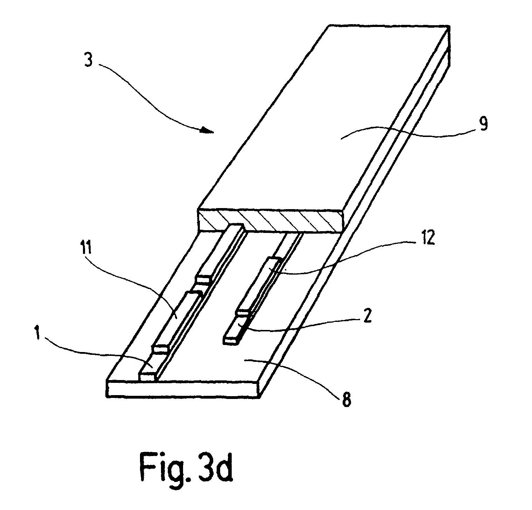

FIG. 3d shows a deactivatable version of the security element 3 of the present invention. The Barkhausen material 1 and the soft magnetic material 2 are combined with a semi-hard and/or hard magnetic material 11; 12.

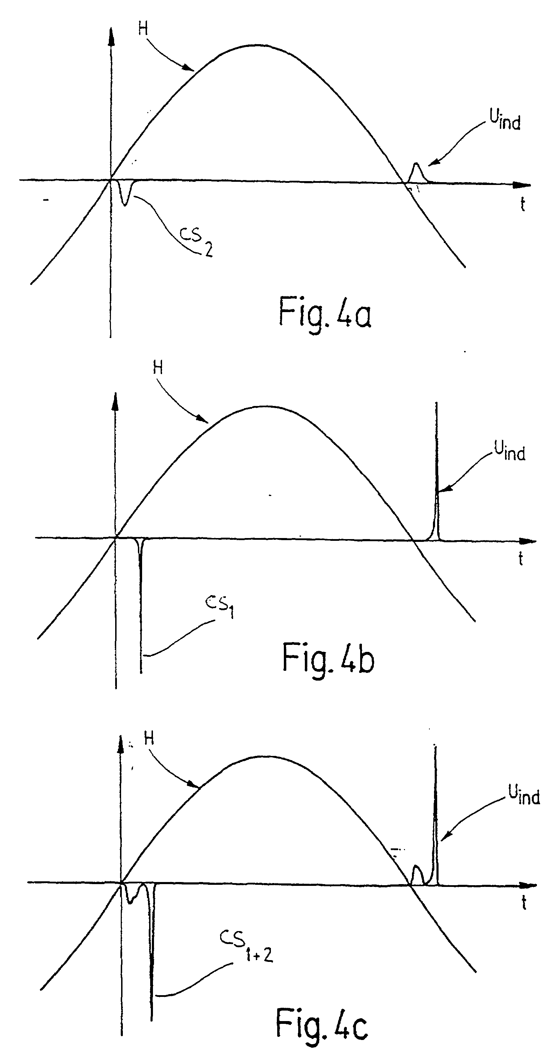

The subsequent FIGS. 4, 5 and 6 illustrate clearly by way of time charts the effect achieved by the security element 3 of the present invention in the different surveillance systems S1, S2. FIG. 4 relates to the signals produced by a soft magnetic security element 2 (FIG. 4a), a Barkhausen security element 1 (FIG. 4b), and the security element of the invention (FIG. 4c) in a Barkhausen surveillance system S1. The sinusoidal curve in the FIGURES indicates the interrogation frequency of the interrogation field H which, in the event of a Barkhausen surveillance system S1, lies in the low-frequency range, for example, at 70 hertz. On a reversal of the magnetization state, the security element 1, 2, 3 emits a characteristic signal inducing a voltage U_{ind} in the receiving device 5. The computing/control unit 7 identifies a received signal as a characteristic signal, producing an alarm. As FIG. 4a shows, the signal component produced by a soft magnetic material 2 in a Barkhausen surveillance system S1 is relatively small, whilst the Barkhausen security element 1 in the Barkhausen surveillance system S1 generates a sharp peak. If there were mutual interference of the two security elements 1, 2 in an uncontrolled way, the resultant intermodulation signal would materially differ from the typical peak shape which stems from a Barkhausen security element 1 operating without disturbance. In consequence, the risk increases for the Barkhausen surveillance system S1 to be unable to identify a "simple" combination of Barkhausen security element 1 and soft magnetic security element 2 as a security element per se, accordingly failing to activate an alarm. Attendant upon this is a material reduction of the detection probability.

This risk is nearly eliminated by the security element 3 of the present invention. As appears clearly from a comparison of FIGS. 4b and 4c, the characteristic signal of the security element 3 of the invention differs only insignificantly from the characteristic signal of a conventional Barkhausen security element 1. The computing/control unit 7 of the Barkhausen surveillance system S1 will readily identify the characteristic signal of the security element 3 of the invention, consequently producing an alarm.

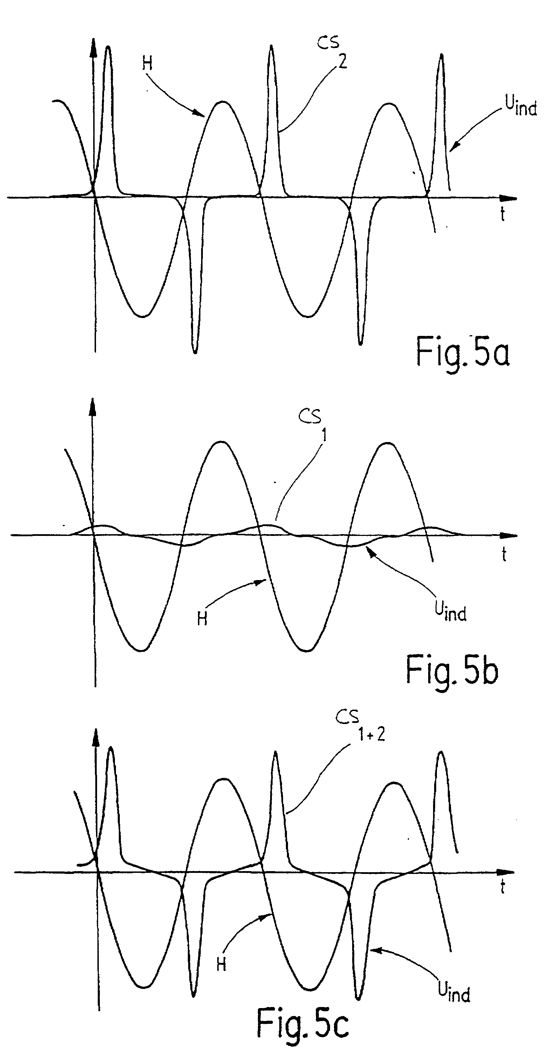

FIG. 5 shows the analogous relationships in cases where a harmonic surveillance system S2 is utilized. The sinusoidal curve indicates again the interrogation frequency of the interrogation field H. In a harmonic surveillance system S2, this frequency is in the kilohertz range, for example, at 5 kilohertz. As becomes apparent from FIG. 5a, a soft magnetic security element 2 generates in the harmonic system S2 a distinctive signal which is again measured as an induced voltage U_{ind} in the receiving device 5. Though being a low level signal (FIG. 5b), the signal of the Barkhausen security element 1 adversely affects the detection rate of the harmonic surveillance system S2 for the reasons recited in connection with the Barkhausen surveillance system 1. Again, a comparison of FIGS. 5a and 5c reveals that the shape of the characteristic signal of the security element 3 of the invention differs little from the shape of the characteristic signal of a simple soft magnetic security element 2.

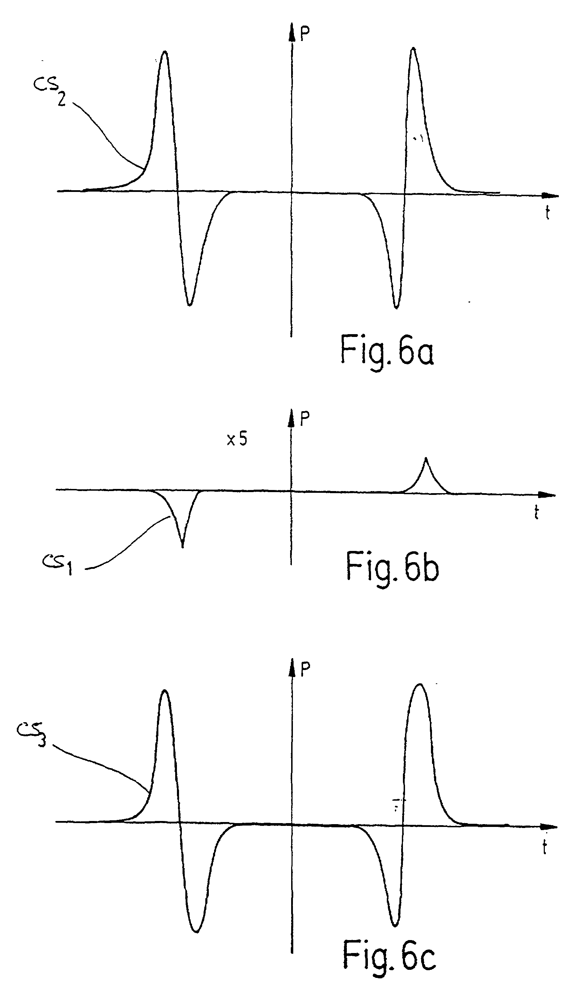

FIG. 6 illustrates the characteristic signals of a soft magnetic security element 2 (FIG. 6a), a Barkhausen security element 1 (FIG. 6b), and the security element 3 of the invention (FIG. 6c) in a harmonic surveillance system S2 having two high-frequency interrogation fields f1, f2 and one low-frequency interrogation field f3. A corresponding harmonic surveillance system S2 has been presented in the opening statement hereof. Again, a comparison of FIGS. 6a and 6c reveals that the characteristic signals of the soft magnetic security element 2 and the security element 3 of the invention essentially coincide. The signal shape of the Barkhausen security element 1 (FIG. 6b) differs from the expected shape. The requisite high detection rate of the surveillance system is not reduced either in the use of the security element 3 of the invention.

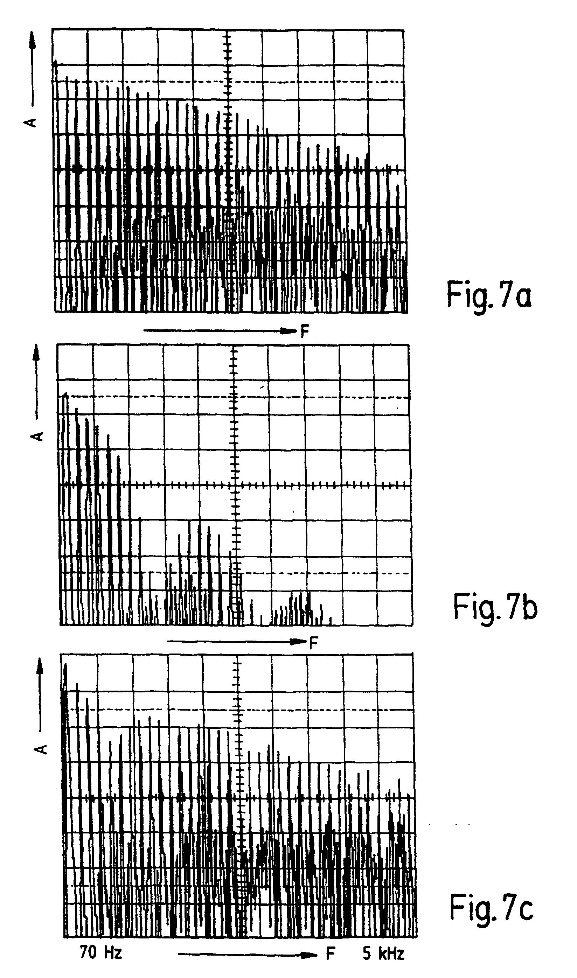

FIGS. 7a through 7c reflect the situation as it presents itself when the security element 3 of the invention is utilized in a Barkhausen surveillance system S1. However, instead of showing signal waveforms, these Figures show the signal frequency spectra.

FIG. 7a illustrates the frequency spectrum of a Barkhausen security element 1 in a Barkhausen surveillance system S1. This frequency spectrum is characterized in that relatively large signal components of the characteristic signal occur even in the high order harmonics of the fundamental frequency (F = 70 Hz).

FIG. 7b shows the frequency spectrum of a soft magnetic security element 2 in a Barkhausen surveillance system S1. By reason of the relatively distinct spectral difference, it is unlikely for the presence of a soft magnetic security element 2 in the Barkhausen surveillance system S1 to produce an alarm.

The situation is completely different with the frequency spectrum of the characteristic signal of the security element 3 of the invention in the Barkhausen surveillance system S1 (FIG. 7c). Coincidence with the Barkhausen security element 1 (FIG. 7a) is so high that an alarm will be produced in the Barkhausen surveillance system S1 as soon as a security element 3 of the invention appears in the interrogation zone 6.

### List of References

- 1: Barkhausen material; Barkhausen security element
- 2: soft magnetic material, soft magnetic security element
- 3: security element of the invention
- 4: transmitting device
- 5: receiving device
- 6: interrogation zone
- 7: computing/control unit
- 8: substratum
- 9: print layer
- 10: article
- 11: semi-hard or hard magnetic material
- 12: semi-hard or hard magnetic material
- S1: surveillance system for Barkhausen security elements
- S2: surveillance system for soft magnetic security elements
- D: distance
- F1: low-frequency range, detection range
- F2: high-frequency range, detection range
- H: alternating magnetic field, interrogation field, field strength
- K1: coercive force of material 1 at F1
- K1': coercive force of material 1 at F2
- L1,L2: length
- CS1: characteristic signal
- CS2: characteristic signal
- U_{ind}: induced voltage

## Claims

1. Security element for the electronic surveillance of articles, comprised of at least two materials (1; 2) of high permeability which, when excited by an external alternating magnetic field (H), emit each a characteristic signal (CS1; CS 2), wherein the maximum signal components of the two materials (1; 2) lie in different frequency ranges (F1; F2), and wherein the signal components of the one material (1; 2) are negligibly low in that particular frequency range (F2; F1) in which the signal component of the other material (2; 1) is at a maximum level.

2. Security element as claimed in claim 1, wherein the physical properties of the two materials (1; 2) are coordinated such that the component of the characteristic signal (CS1; CS2) of the one material (1; 2) is negligibly low in that particular frequency range (F2; F1) in which the signal component of the characteristic signal (CS2; CS1) of the other material (2; 1) is at a maximum level.

3. Security element for the electronic surveillance of articles, comprised of a material (1) with Barkhausen effect that is a material having high permeability; low coercive force (K1) in a first frequency range F1 and high coercive force (K1') in a second frequency range F2, where F2 >> F1, which material is excited by an external magnetic field (H) to emit a characteristic signal (CS1) detectable in a first surveillance system (S1), and of a soft magnetic material having high permeability and low coercive force (K2) in the second frequency range F2 which, when an alternating magnetic field (H) is applied, is excited to emit a characteristic signal (CS2) detectable in a second surveillance system (S2), wherein the physical properties of the two materials (1, 2) are coordinated such that the intensity of the characteristic signal (CS2) of the soft magnetic material (2) is negligibly low in the detection range F1 of the first surveillance system (S1), whilst it attains its maximum level in the detection range F2 of the second surveillance system (S2), and that the intensity of the characteristic signal (CS1) of the material (1) with Barkhausen effect attains a maximum level in the detection range F1 of the first surveiliance system (S1), whilst it is negligibly low in the detection range F2 of the second surveillance system (S2).

4. Security element as claimed in claim 1 or 3, wherein the materials (1; 2) are present in the form of a thin film and/or a strip and/or a wire and/or a foil.

5. Security element as claimed in claim 3, wherein the bulk components of the two materials (1; 2) are dimensioned such that their signal components in the respective other surveillance system (S2; S1) are negligibly low.

6. Security element as claimed in claim 1, 3 or 5, wherein the materials (1; 2) are in such relative arrangement or relative spacing that their interaction is minimal.

7. Security element as claimed in claim 1 or 3, wherein the two materials (1; 2) are of an elongated shape and are aligned parallel to each other.

8. Security element as claimed in claim 1 or 3, wherein the two materials (1; 2) are of an elongated shape and are arranged at any desired relative angle (α).

9. Security element as claimed in claim 1 or 3, wherein the two materials (1; 2) have low magnetostriction.

10. Security element as claimed in claim 1 or 3, wherein at least one of the materials (1 or 2) are combined with a semi-hard or hard magnetic material (11 or 12) to allow deactivation.

11. Security element as claimed in claim 10, wherein the semi-hard or hard magnetic material (11 or 12) which is combined with at least one of the materials (1 or 2) consists of segments and/or a complete strip used for deactivation.

12. Security element as claimed in claim 10 or 11, wherein each of the materials (1 or 2) is combined with a semi-hard or hardmagnetic material (11 or 12), whereby the semi-hard or hardmagnetic materials (11 or 12) differs in at least one of their magnetic properties, especially in their coercive field levels.

13. Electronic surveillance system in combination with a security element for the electronic surveillance of articles, comprised of at least two materials (1; 2) of high permeability which, when excited by an external alternating magnetic field (H), emit each a characteristic signal (CS1; CS2), wherein the maximum signal components of the two materials (1; 2) lie in different frequency ranges (F1; F2), and wherein the signal components of the one material (1; 2) are negligibly low in that particular frequency range (F2; F1) in which the signal component of the other material (2; 1) is at a maximum level.

14. Electronic surveillance system in combination with a security element for the electronic surveillance of articles, comprised of a material (1) with Barkhausen effect that is a material having high permeability; low coercive force (K1) in a first frequency range F1 and high coercive force (K1') in a second frequency range F2, where F2 >> F1, which material is excited by an external magnetic field (H) to emit a characteristic signal (CS 1) detectable in a first surveillance system (S1), and of a soft magnetic material having high permeability and low coercive force (K2) in the second frequency range F2 which, when an alternating magnetic fieid (H) is applied, is excited to emit a characteristic signal (CS2) detectable in a second surveillance system (S2), wherein the physical properties of the two materials (1; 2) are coordinated such that the intensity of the characteristic signal (CS2) of the soft magnetic material (2) is negligibly low in the detection range F1 of the first surveillance system (S1), whilst it attains its maximum level in the detection range F2 of the second surveillance system (S2), and that the intensity of the characteristic signal (CS1) of the material (1) with Barkhausen effect attains a maximum level in the detection range F1 of the first surveillance system (S1), whilst it is negligibly low in the detection range F2 of the second surveillance system (S2).

## Patentansprüche

1. Sicherungselement für die elektronische Artikelsicherung, bestehend aus mindestens zwei Materialien (1; 2) mit hoher Permeabilität, die bei Anregung durch ein äußeres magnetisches Wechselfeld (H) jeweils ein charakteristisches Signal (cs1; cs2) aussenden, wobei die maximalen Signalanteile beider Materialien (1; 2) in unterschiedlichen Frequenzbereichen (F1; F2) liegen, und wobei die Signalanteile des einen Materials (1; 2) jeweils in dem Frequenzbereich (F2; F1) vernachlässigbar gering sind, in dem das andere Material (2; 1) einen maximalen Signalanteil aufweist.

2. Sicherungselement nach Anspruch 1, wobei die physikalischen Eigenschaften der beiden Materialien (1; 2) derart aufeinander abgestimmt sind, daß der Anteil des charakteristischen Signals (cs1; cs2) des einen Materials (1; 2) in dem Frequenzbereich (F2; F1) vernachlässigbar gering ist, in dem der Signalanteil des charakteristischen Signals (cs2; cs1) des jeweils anderen Materials (2; 1) sein Maximum erreicht.

3. Sicherungselement für die elektronische Artikelsicherung, bestehend aus einem Material (1) mit Barkhauseneffekt, das ein Material mit hoher Permeabilität und geringer Koerzitivkraft (K1) in einem ersten Frequenzbereich F1 und großer Koerzitivkraft (K1') in einem zweiten Frequenzbereich F2 ist, mit F2 >> F1, und das durch ein äußeres Magnetfeld (H) zur Aussendung eines charakteristischen Signals (cs1) angeregt wird, welches in einem ersten Überwachungssystem (S1) erkennbar ist, und aus einem weichmagnetischen Material mit hoher Permeabilität und kleiner Koerzitivkraft (K2) im zweiten Frequenzbereich F2, das bei Anlegen eines magnetischen Wechselfeldes (H) zur Aussendung eines charakteristischen Signals (cs2) angeregt wird, welches in einem zweiten Überwachungssystem (S2) erkennbar ist, wobei die physikalischen Eigenschaften der beiden Materialien (1; 2) derart aufeinander abgestimmt sind, daß die Intensität des charakteristischen Signals (cs2) des weichmagnetischen Materials (2) im Detektionsbereich F1 des ersten Überwachungssystems (S1) vernachlässigbar gering ist, während sie in dem Detektionsbereich F2 des zweiten Überwachungssystems (S2) ihr Maximum erreicht, und daß die Intensität des charakteristischen Signals (cs1) des Materials (1) mit Barkhauseneffekt im Detektionsbereich F1 des ersten Überwachungssystems (S1) einen maximalen Wert erreicht, während sie in dem Detektionsbereich F2 des zweiten Überwachungssystems (S2) vernachlässigbar gering ist.

4. Sicherungselement nach Anspruch 1 oder 3, wobei die Materialien (1; 2) in Form eines Dünnfilms und/oder eines Streifens und/oder eines Drahtes und/oder einer Folie vorliegen.

5. Sicherungselement nach Anspruch 3, wobei die Volumenanteile beider Materialien (1; 2) derart bemessen sind, daß ihre Signalanteile in dem jeweils anderen Überwachungssystem (S2; S1) vernachlässigbar gering sind.

6. Sicherungselement nach Anspruch 1, 3 oder 5, wobei die Materialien (1; 2) derart zueinander angeordnet bzw. voneinander beabstandet sind, daß ihre Wechselwirkung minimal ist.

7. Sicherungselement nach Anspruch 1 oder 3, wobei beide Materialien (1; 2) eine längliche Form aufweisen und parallel zueinander ausgerichtet sind.

8. Sicherungselement nach Anspruch 1 oder 3, wobei beide Materialien (1; 2) eine längliche Form aufweisen und unter einem beliebigen Winkel (α) zueinander angeordnet sind.

9. Sicherungselement nach Anspruch 1 oder 3, wobei beide Materialien (1; 2) eine geringe Magnetostriktion aufweisen.

10. Sicherungselement nach Anspruch 1 oder 3, wobei mindestens eines der Materialien (1 oder 2) mit einem halbhart- oder hartmagnetischen Material (11 oder 12) kombiniert ist, um eine Deaktivierung zu ermöglichen.

11. Sicherungselement nach Anspruch 10, wobei das halbhart- oder hartmagnetische Material (11 oder 12), das mit mindestens einem der Materialien (1 oder 2) kombiniert ist, aus Segmenten und/oder einem vollständigen Streifen zur Deaktivierung besteht.

12. Sicherungselement nach Anspruch 10 oder 11, wobei jedes der Materialien (1 oder 2) mit einem halbhart- oder hartmagnetischen Material (11 oder 12) kombiniert ist, wobei sich die halbhart- oder hartmagnetischen Materialien (11 oder 12) in mindestens einer ihrer magnetischen Eigenschaften unterscheiden, insbesondere in der Größe ihrer Koerzitivfeider.

13. Elektronisches Überwachungssystem in Kombination mit einem Sicherungselement für die elektronische Artikelsicherung, bestehend aus mindestens zwei Materialien (1; 2) mit hoher Permeabilität, die bei Anregung durch ein äußeres magnetisches Wechselfeld (H) jeweils ein charakteristisches Signal (cs1; cs2) aussenden, wobei die maximalen Signalanteile beider Materialien (1; 2) in unterschiedlichen Frequenzbereichen (F1; F2) liegen, und wobei die Signalanteile des einen Materials (1; 2) jeweils in dem Frequenzbereich (F2; F1) vernachlassigbar gering sind, in dem das andere Material (2; 1) einen maximalen Signalanteil aufweist.

14. Elektronisches Überwachungssystem in Kombination mit einem Sicherungselement für die elektronische Artikelsicherung, bestehend aus einem Material (1) mit Barkhauseneffekt, das ein Material mit hoher Permeabilität und geringer Koerzitivkraft (K1) in einem ersten Frequenzbereich F1 und großer Koerzitivkraft (R1') in einem zweiten Frequenzbereich F2 ist, mit F2 >> F1, und das durch ein äußeres Magnetfeld (H) zur Aussendung eines charakteristischen Signals (cs1) angeregt wird, welches in einem ersten Überwachungssystem (S1) erkennbar ist, und aus einem weichmagnetischen Material mit hoher Permeabilität und kleiner Koerzitivkraft (K2) im zweiten Frequenzbereich F2, das bei Anlegen eines magnetischen Wechselfeldes (H) zur Aussendung eines charakteristischen Signals (cs2) angeregt wird, welches in einem zweiten Überwachungssystem (S2) erkennbar ist, wobei die physikalischen Eigenschaften der beiden Materialien (1; 2) derart aufeinander abgestimmt sind, daß die Intensität des charakteristischen Signals (cs2) des weichmagnetischen Materials (2) im Detektionsbereich F1 des ersten Überwachungssystems (S1) vernachlässigbar gering ist, während sie in dem Detektionsbereich F2 des zweiten Überwachungssystems (S2) ihr Maximum erreicht, und daß die Intensität des charakteristischen Signals (cs1) des Materials (1) mit Barkhauseneffekt im Detektionsbereich F1 des ersten Überwachungssystems (S1) einen maximalen Wert erreicht, während sie in dem Detektionsbereich F2 des zweiten Überwachungssystems (S2) vernachlässigbar gering ist.

## Revendications

1. Elément de sécurité destiné à la surveillance électronique d'articles, composé d'au moins deux matériaux (1 ; 2) à forte perméabilité qui, lorsqu'ils sont excités par un champ magnétique alternatif externe (H), émettent un signal caractéristique (CS 1 ; CS 2), dans lequel les composantes de signal maximal des deux matériaux (1 ; 2) se situent dans différentes gammes de fréquences (F1 ; F2), et dans lequel les composantes de signal de l'un des matériaux (1 ; 2) sont faibles, à un degré négligeable, dans cette gamme de fréquences particulière (F2 ; F1) dans laquelle la composante de signal de l'autre matériau (2 ; 1) est à un niveau maximal.

2. Elément de sécurité selon la revendication 1, dans lequel les propriétés physiques des deux matériaux (1 ; 2) sont coordonnées de sorte que la composante du signal caractéristique (CS 1 ; CS 2) de l'un des matériaux (1 ; 2) est faible, à un degré négligeable, dans cette gamme de fréquence particulière (F2, F1) dans laquelle la composante de signal du signal caractéristique (CS 2; CS 1) de l'autre matériau (2 ; 1) est à un niveau maximal.

3. Elément de sécurité destiné à la surveillance électronique d'articles, composé d'un matériau (1) avec effet Barkhausen qui est un matériau présentant une forte perméabilité ; un faible champ coercitif (K1) dans une première gamme de fréquences F1 et un fort champ coercitif (K1') dans une deuxième gamme de fréquences F2, où F2 >> F1, lequel matériel est excité par un champ magnétique externe (H) pour émettre un signal caractéristique (CS 1) détectable dans un premier système de surveillance (S1), et d'un matériau magnétique doux présentant une forte perméabilité et un faible champ coercitif (K2) dans la deuxième gamme de fréquences (F2), qui, lorsqu'un champ magnétique alternatif (H) est appliqué, est excité pour émettre un signal caractéristique (CS 2) détectable dans un deuxième système de surveillance (S2), dans lequel les propriétés physiques des deux matériaux (1, 2) sont coordonnées de sorte que l'intensité du signal caractéristique (CS 2) du matériau magnétique doux (2) est faible, à un degré négligeable, dans la gamme de détection F1 du premier système de surveillance (S1), tandis qu'il atteint son niveau maximal dans la gamme de détection F2 du deuxième système de surveillance (S2), et que l'intensité du signal caractéristique (CS 1) du matériau (1) avec effet Barkhausen atteint un niveau maximal dans la gamme de détection F1 du premier système de surveillance (S1), tandis qu'il est faible, à un degré négligeable, dans la gamme de détection F2 du deuxième système de surveillance (S2).

4. Elément de sécurité selon la revendication 1 ou 3, dans lequel les matériaux (1 ; 2) sont présents sous la forme d'une couche mince et/ou d'une bande et/ou d'un fil et/ou d'une feuille.

5. Elément de sécurité selon la revendication 3, dans lequel les composants en profondeur des deux matériaux (1 ; 2) sont dimensionnés de sorte que leurs composantes de signal dans l'autre système de surveillance respectif (S2 ; S1) soient faibles, à un degré négligeable.

6. Elément de sécurité selon la revendication 1, 3 ou 5, dans lequel les matériaux (1 ; 2) sont dans une telle disposition relative ou un tel espacement relatif que leur interaction est minimale.

7. Elément de sécurité selon la revendication 1 ou 3, dans lequel les deux matériaux (1 ; 2) sont d'une forme allongée et sont alignés parallèlement l'un à l'autre.

8. Elément de sécurité selon la revendication 1 ou 3, dans lequel les deux matériaux (1 ; 2) sont d'une forme allongée et sont disposés à tout angle relatif désiré (α).

9. Elément de sécurité selon la revendication 1 ou 3, dans lequel les deux matériaux (1 ; 2) présentent une faible magnétostriction.

10. Elément de sécurité selon la revendication 1 ou 3, dans lequel au moins l'un des matériaux (1 ou 2) est combiné avec un matériau magnétique semi-dur ou dur (11 ou 12) pour permettre la désactivation.

11. Elément de sécurité selon la revendication 10, dans lequel le matériau magnétique semi-dur ou dur (11 ou 12) qui est combiné avec au moins l'un des matériaux (1 ou 2) se compose de segments et/ou d'une bande complète utilisés pour la désactivation.

12. Elément de sécurité selon la revendication 10 ou 11, dans lequel chacun des matériaux (1 ou 2) est combiné avec un matériau magnétique semi-dur ou dur (11 ou 12), et dans lequel les matériaux magnétiques semi-durs ou durs (11 ou 12) différent au moins par l'une de leurs propriétés magnétiques, spécialement par leurs niveaux de champs coercitifs.

13. Système de surveillance électronique en combinaison avec un élément de sécurité destiné à la surveillance électronique d'articles, composé d'au moins deux matériaux (1 ; 2) à forte perméabilité qui, lorsqu'ils sont excités par un champ magnétique alternatif externe (H), émettent chacun un signal caractéristique (CS 1 ; CS 2), dans lequel les composantes de signal maximal des deux matériaux (1 ; 2) se situent dans différentes gammes de fréquence (F1 ; F2) et dans lequel les composantes de signal de l'un des matériaux (1 ; 2) sont faibles, à un degré négligeable, dans cette gamme de fréquences particulière (F2 ; F1), dans laquelle la composante de signal de l'autre matériau (2 ; 1) est à un niveau maximal.

14. Système de surveillance électronique en combinaison avec un élément de sécurité destiné à la surveillance électronique d'articles, composé d'un matériau (1) avec effet Barkhausen qui est un matériau présentant une forte perméabilité ; un faible champ coercitif (K1) dans une première gamme de fréquences F1 et un fort champ coercitif (K1') dans une deuxième gamme de fréquences F2, où F2 » F1, lequel matériau est excité par un champ magnétique externe (H) pour émettre un signal caractéristique (CS 1) détectable dans un premier système de surveillance (S1) et d'un matériau magnétique doux présentant une forte perméabilité et un faible champ coercitif (K2) dans la deuxième gamme de fréquences F2, qui, lorsqu'un champ magnétique alternatif (H) est appliqué, est excité pour émettre un signal caractéristique (CS 2) détectable dans un deuxième système de surveillance (S2), dans lequel les propriétés physiques des deux matériaux (1 ; 2) sont coordonnées de sorte que l'intensité du signal caractéristique (CS 2) du matériau magnétique doux (2) est faible, à un degré négligeable, dans la gamme de détection F1 du premier système de surveillance (S1), tandis qu'elle atteint son niveau maximal dans la gamme de détection F2 du deuxième système de surveillance (S2), et que l'intensité du signal caractéristique (CS 1) du matériau (1) avec effet Barkhausen atteint un niveau maximal dans la gamme de détection F1 du premier système de surveillance (S1), tandis qu'elle est faible, à un degré négligeable, dans la gamme de détection F2 du deuxième système de surveillance (S2).
